# EUROPEAN PATENT APPLICATION

(11) **EP 1 408 507 A2**
(43) Date of publication of application: **14.04.2004**
(21) Application number: 03021225.2
(22) Date of filing: 18.09.2003
(51) Int. Cl.: G11B 27/11, G11B 27/10, H04N 5/00, H04N 5/781, H04N 5/85

(54) **Extended time-code for multimedia presentations**

(30) Priority: 07.10.2002 US 416976 P; 30.06.2003 US 610493 P
(71) Applicant: MICROSOFT CORPORATION, Redmond, Washington 98052-6399 (US)
(72) Inventor: Hughes, Robert K., Jr., Washington 98133 (US)
(74) Representative: Grünecker, Kinkeldey, Stockmair & Schwanhäusser Anwaltssozietät

(57) **Abstract**

The present disclosure relates to providing extended time-code numbers to multimedia elements that make up multimedia presentation content. A linear time-code is used to properly sequence the multimedia elements for proper presentation. Prefix and suffixes are attached to the linear time-code to different between multimedia elements having the same linear time-code. Multimedia elements having the same linear time-code are used for different presentation variations, such as scene variations for a movie. The unique extended time-code may be provided in a time map table such as used in a medium such as DVD, and may be provided separate from the multimedia elements. Such a time map is appended to a pre-existing information file or provided as a replacement information extension file that includes a legacy IFO file.

## Description

### PRIORITY TO PROVISIONAL APPLICATION

This application claims priority to provisional application serial number 60/416,976 filed October 7, 2002.

### TECHNICAL FIELD

The systems and methods described herein relate to associating time references to multimedia presentations and specifically to systems and methods that associate unique time-code values to audio video elements and interspersed elements.

### BACKGROUND

Audio video (A/V) presentations are made up of discrete elements (A/V elements) that include video frames, pictures, video clips, and audio clips. A grouping or sequencing of A/V elements (i.e., video and audio) provides a particular scene or chapter in an A/V presentation. Examples of A/V presentations include video tape movies, television broadcast, and multiple titles in a digital versatile disc (DVD). DVD disc titles may include a trailer title, a promotional title, and a movie title. In certain DVD discs, there may be multiple movie titles.

To provide the proper viewing experience, specific video and audio elements are sequenced to play at a particular time. To accomplish this, various elements are associated with time values which are in turn compared with a time reference or other linearly increasing clock value to determine when to initiate the elements. For example, audio and video elements for a first scene of a movie might be played beginning at a time 141 and audio and video elements for a second scene of the movie might be played beginning at a subsequent time 160, wherein both times are specified in relation to the common time reference.

Prior methods of providing time values for audiovisual elements include a scheme known as "control track." Videotape presentations make particular use of the control track scheme. The control track scheme attaches nondescript pulses to each frame of a videotape. As the videotape is played, the pulses trigger a counter, which in turn generates a monotonically increasing time value corresponding to the currently playing point in the presentation. This time value is compared to the time reference to govern playback speed, location, and synchronization. A shortcoming in the control track scheme is that different time values are generated depending on the point in the presentation at which the counter is initiated―the point at which playback begins. This can be problematic when searching for and accurately identifying particular frames, since there is no unique value that can be guaranteed to be consistently associated with any particular frame.

"Time-code" schemes are alternatives to the control track scheme. A time-code scheme associates a multi-bit time-code number to each A/V element or scene. A time-code number can be structured as "HH:MM:SS:FF" where "HH" represents hours, "MM" represents minutes, "SS" represents seconds, and "FF" represents frames within each second. Corresponding video and audio elements have the same time-code number, so that the particular video and corresponding audio begin at the same time. Again, the time-code values are compared with the time reference to determine when the elements are to be initiated.

The Society of Motion Picture and Television Engineers (SMPTE), a professional organization chartered to developed standards for film and video, standardized the use of time-code. Evolving SMTPE time-code standards include SMTPE 12M and SMTPE 328M. Since SMTPE time-code standards are widely implemented in industry, it is desirable that A/V presentations support or are backwards compatible with SMPTE time-code.

In many cases, an A/V element is made up of a computer or machine-readable data file. In this case, a time-code number may be placed in a header of each A/V element or file. Each element might correspond to a particular scene in a movie, and a movie therefore might comprise a number of scenes or elements.

Movies and their corresponding A/V elements are often stored and distributed on a DVD. A DVD contains audiovisual data that is organized as video object units (VOBUs). A VOBU is a physical unit of DVD storage, and is the smallest access unit of a DVD disc. A contiguous (physically sequential) group of VOBUs may make up a unit known as a "cell". A cell is the smallest portion of video addressable by an index. Each cell corresponds to some portion of A/V content, for instance a scene. Cells may vary in temporal length from fractions of a second to hours.

A group of cells may logically make up a video object (VOB). A VOB is single file that may include multiple multiplexed audio and video streams. A collection of VOBs may make up a video object set (VOBS).

A DVD might have numerous "titles". Each title is a potentially different arrangement or sequencing of cells (and VOBUs). In many cases, these titles might correspond to different versions of a movie. For example, a movie might have versions with different ratings, in different languages, and so on. When viewing a DVD, the user typically selects which version is to be rendered. In many cases, different titles will share or make use of many of the same cells or VOBUs [from the same VOBS, Video Object Set; possibly from the same VOB file in the set].

Data on a DVD is physically formatted as a sequence of logical sectors identified by logical sector numbers (LSNs). Each sector contains a sequence of 2048 bytes of data. It is conventional for cells and VOBs on the DVD to be specified in terms of their sectors' LSN and byte offset into a file or sector.

Each Video Title Set on a DVD has an information or IFO file that describes the playback behavior and user control options for "Titles" on the DVD. In particular an IFO file provides pointers to cells (i.e., LSN) on the DVD. The IFO file specifically is used in the playing of titles on the DVD providing navigation and presentation information.

Because of the DVD's organization, its content can be played in different ways to result in the different DVD titles. Titles in a DVD-Video disc may be made up of up to 999 program chains (PGC). A program chain contains up to 99 programs (PG). A PGC is a list of cells. Each PGC has a program control block (PCB) that includes an ordered set of pointers to cells indicating a sequence in which programs and cells are to be played. Different PGCs allow different sequences of cells. IFO files provide the indexes to resolve the cells listed in a PGC to VOBUs and LSNs that allow playing of different titles with different video sequences.

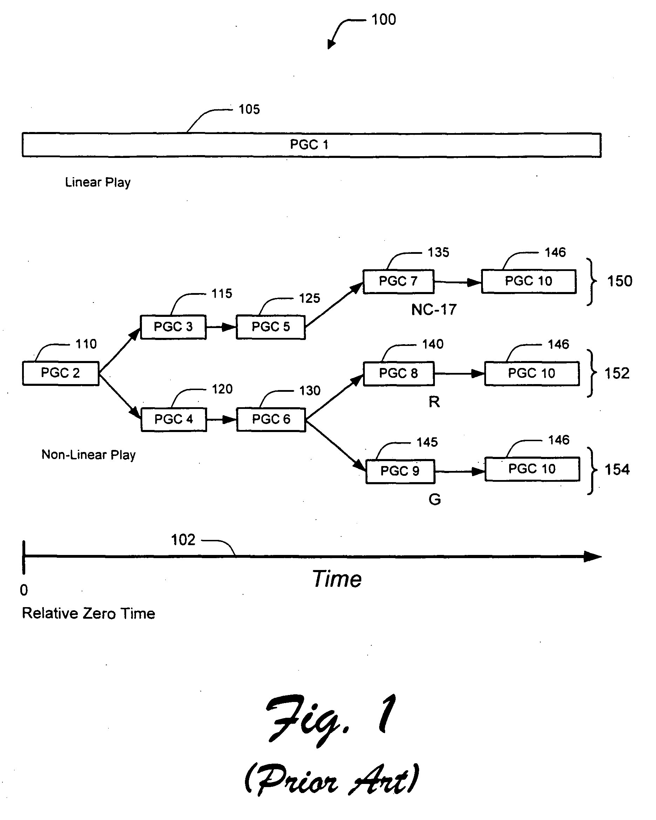

Fig. 1 illustrates two types of DVD titles and how they might be played. DVD titles start at a "Relative Zero Time" on a timeline 102, where timeline 102 represents a linear time reference. A DVD title that is to be played straight through is referred to as an "one_sequential_PGC title". A DVD title that has potential variations in its sequencing is referred to as a "multi_PGC title", a "multi_angle title", or a "parental_block title". A PGC 1 105 is shown that provides for a title to be played straight through or provides for linear play. Nonlinear play exists when a "multi_PGC title", "multi_angle title", or a "parental_block title" exists. A particular title may start with a PGC 2 110 then branches off to either a PGC 3 115 or a PGC 4 120. PGC 3 115 branches to a PGC 5 125. PGC 4 120 branches to a PGC 6 130. PGC 5 125 branches to PGC 7 135. PGC 6 130 may branch to either a PGC 8 140 or a PGC 9 145. Finally, all titles in this example end by playing PGC 10 146 in locations 150, 152, or 154.

The version of the title that branches to PGC 7 135 might be a NC-17 rated version of the movie. The version of the title that branches to PGC 8 140 might be an R rated version of the movie. The version of the title that branches to PGC 9 145 might be a G rated version of the movie.

Different variations (i.e. titles having "multi_PGC title" or "parental_block title") will have scenes that start at different times. In other words different variations will have corresponding scenes that may start at different times on timeline 102, which is the duration of time from the start of PGC 2 110. This is because titles defined by "multi_PGC title" may have different videos for the same scene, and/or different languages for the same video. Based only on a time-code number, there is no way to differentiate which video and/or which audio of the different variations to play for a particular scene. In this example, PGC 10 146 could begin playing at three different times on timeline 102, depending on the title playing and the path taken to get there.

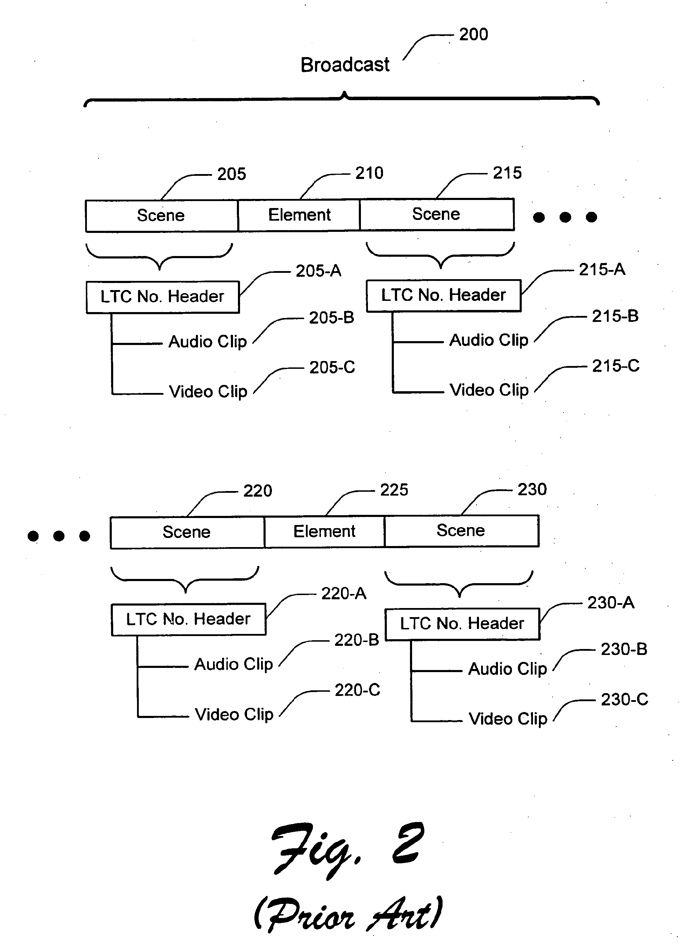

Time-code numbers may also apply to broadcasts or streaming of A/V presentations. Fig. 2 illustrates a prior art streaming of scenes interspersed with elements, such as a hypertext markup language (HTML) document that represents a commercial. An element is distinguished from a scene that is composed of audio and video components. The scenes and elements may come from different sources or broadcast points. A user receives a broadcast 200 that includes a stream(s) of scenes and elements. The scenes may be made up of a number of discrete A/V components that include audio and video clips. In this example broadcast 200 broadcasts in the following order: scene 205, element 210, scene 215, scene 220, element 225 and scene 230. Each A/V component (clip) of each scene is identified by a particular linear time-code (LTC) number. The particular LTC number is placed in the file header of and identifies each scene. The example shown illustrates a LTC header 205-A that is associated with audio clip 205-B and video clip 205-C of scene 205. LTC header 215-A is associated with audio clip 215-B and video clip 215-C of scene 215. LTC header 220-A is associated with audio clip 220-B and video clip 220-C of scene 220. LTC header 230-A is associated to audio clip 230-B and video clip 230-C of scene 230.

Elements 210 and 225 may be computer (machine) readable files such as files written in HTML or a similar language. In this example elements 210 and 225 do not have particular LTC numbers associated with them. Broadcast and received streams of scenes have LTC numbers describing when the scenes are to be played; however, elements without LTC numbers do not have information to indicate when they are to be played. This is particularly problematic when scenes and interspersed elements are received from different sources and there is no way to determine their sequence of play.

An evolving area is web based multimedia playback that incorporates DVD video from a local player, interspersed with elements from a remote web site. Such elements may include scene updates, scene changes (e.g., new plot twists in a movie), different language (audio) tracks, overlays of text and graphics (e.g., subtitles), and/or promotional content. Since a DVD relies on an IFO file, new or interspersed web based elements without time-code can not be sequenced with existing A/V elements or randomly accessed based on the existing IFO file.

### SUMMARY

The systems and methods described herein include identifying multimedia elements that have linear time-code numbers associated with them and adding prefix and suffix values to the linear time-code numbers to create unique extended time-code numbers that differentiate the particular multimedia elements.

In certain embodiments linear time-code numbers with prefix and suffix values are added to multimedia elements without a linear time-code.

In particular embodiments, a time map table may be used to correlate extended time-code numbers with particular multimedia elements.

### BRIEF DESCRIPTION OF THE DRAWINGS

Fig. 1 is a block diagram illustrating titles defined by a linear play "one_sequential_PGC title" and a non-linear play "multi_PGC_tile".
Fig. 2 is a block diagram illustrating prior art streaming of scenes and interspersed elements from a broadcast point or broadcast points.
Fig. 3A is a block diagram illustrating receiving a stream of interspersed elements from one source and a stream of primary elements from another source at a player.
Fig. 3B is a block diagram illustrating an extended time-code header that is part of interspersed and primary elements.
Fig. 4 is a block diagram illustrating an IFX file that includes an IFO file and an appended time map table, and interrelationship to a DVD.
Fig. 5 is a block diagram illustrating a system of multimedia devices and broadcasters to provide multimedia presentations.
Fig. 6 is a block diagram illustrating an architecture of a multimedia device.
Fig. 7 is a block diagram illustrating an architecture of a multimedia player.
Fig. 8 is a flowchart illustrating a process to create or add extended time-code values to A/V elements and/or elements.
Fig. 9 is a flowchart illustrating a process which searches for an element based on an extended time-code number.

### DETAILED DESCRIPTION

### Unique Time-code Identifier Number

The techniques described utilize prefixes and suffixes in combination with linear time-code numbers in order to provide a unique identification of any particular multimedia element. In some embodiments, the prefixes and suffixes are appended to the SMPTE time-code structure "HH.MM.SS.FF" in order to preserve backwards compatibility with relevant precursor standards, such as SMPTE 12M and 328M. The SMPTE time-code structure HH:MM:SS:FF" is defined as follows: "HH" represents hours, "MM" represents minutes, "SS" represents seconds, and "FF" represents frames within each second.

Fig. 3A shows receiving interspersed elements and primary elements. Interspersed elements 300(1), 300(2), ..., 300(N) include for each particular interspersed element 300 a header 305(1), 305(2), ..., 305(N), and actual content 310(1), 310(2), ..., 310(N). Interspersed elements 300 are received at a player 315. Interspersed elements 300 may be received from a source such as an Internet source (e.g., a website).

Player 315 further receives primary elements 320(1), 320(2), ..., 320(N) that includes for each particular primary element 320 a header 325(1), 325(2), ..., 325(N), and actual content 330(1), 330(2), ..., 330(N). Primary elements 320 may be received from a separate source; such as an Internet source (e.g., a second website). When actual contents 310 and 330, are authored, the relative timings of actual contents 310 and 320 relative to one another may not be known. By attaching a time-code or timestamps to headers 305 and 325, each of the interspersed elements 300 may be properly sequenced amongst each of the primary elements 320.

For example, the player 315 may be playing primary elements 320 from a DVD disc, while interspersed elements 300 are received from (i.e., streamed from) a website where the interspersed elements 300 may be director's comments related to particular primary elements 320. With a time-code attached to each interspersed element 300, a proper sequencing is performed with the primary elements 320. In other words, the director's comments of interspersed elements 300 match particular primary elements 320, which may be scenes of a movie. Other examples include properly sequencing promotional elements such as commercials as interspersed elements 300 with primary elements 320 which may be a movie. This allows commercials to be appropriately placed between scenes of a movie. Presentation of "interspersed elements" may alternate with the primary audiovisual elements, or be simultaneous (e.g., foreign language dialog synchronized to actors' lips, and graphical or text subtitles presented superimposed on the video image or underneath it).

Fig. 3B illustrates pertinent details of a header 335 associated with a particular piece of content 300 and 320. The header 335 comprises an LTC number 340, a prefix 345, and suffixes 350, 355, and 360. LTC number field 340 specifies a presentation time in the format "HH.MM.SS.FF", to indicate when content 300 and 320 should begin. LTC number field 340 may be a pre-existing SMPTE number that has previously been associated with a particular A/V element, or may be a derived value that is attached to a multimedia element that previously did not have an SMPTE number. Sequencing of interspersed elements with corresponding audio/video (A/V) elements may be performed as a production process by when the audio and video elements are created or edited for a particular A/V presentation. Alternatively, corresponding time-code numbers may be attached to interspersed elements separately delivered (i.e. combining web delivered content with audiovisual content from a local DVD-Video disc), and the separately delivered elements linked to existing A/V elements with mutually consistent time-code numbers. This process is referred to as "late-bound" or "late-binding" synchronization. Time-code itself may be "late-bound" to existing audiovisual content by downloading a time-code index that references audiovisual content that was previously without time-code (e.g.., a time map table that synchronizes time-code to audiovisual content using an LSN index).

Prefix 345 precedes LTC number field 340 and comprises an epoch or title field. Title field 345 may describe and differentiate particular titles in a DVD disc, or may describe or differentiate between a broadcast program or streamed movie and an interspersed element such as a commercial. For example, on a particular DVD disc, there may be a title that contains a special video feature about how the movie was made, and a title that contains the movie. It may be desirable to sequence particular multimedia elements from the special feature with scenes from the movie title. In accordance with the scheme described herein, a particular special feature video segment will be sequenced with a particular movie scene, and may have the same time-code value in its respective LTC number field 340. The prefix title field 345 is used to differentiate between the comment and movie scene. For example, the respective headers might contain "making the movie.00:53:33:13" and "movie.00:53:33:13" where a LTC value of "00:53:33:13" is used to synchronize a particular comment with a particular movie scene.

Prefix title field 345 itself may be formatted in accordance with one of several standards including International Standard Audiovisual Number (ISAN). ISAN is intended to provide a global database that uniquely labels each video work, such as a movie or television show. The ISAN numbering convention defines an identifier of 16 hexadecimal digits divided into two segments: a 12-digit root segment followed by a 4-digit segment for the identification of episodes or parts when applicable.

As discussed there may be different variations that include different combinations of video and audio describing particular scenes. Variations include, but are not limited to, language, camera angle, and rating (i.e., parental block). Header 335 contains three suffix value fields: language field 350, angle field 355, and parental block (rating) field 360. Language field 350 differentiates a particular title by the language used in audio, video, and subpictures (e.g, Spanish, English, and French). Angle field 355 differentiates further differentiates a title by camera perspective (e.g., front, back, first person). Parental block field 360 differentiates a particular title by rating (e.g., "G", "R", "PG").

Different A/V elements (i.e. different scenes that are played for different variations) may make use of the same value for LTC number 340 (i.e., different scenes played at the same time or sequence); however, they are differentiated by particular values for language field 350, angle field 355, and parental block field 360. For example, if a particular combination of prefixes and suffixes allow, there may be a scene described by "movie.1:23:02.15.span.front.NC-17" where a movie scene starts at a relative time value of 1 hour, 23 minutes, 2 seconds, and 15 frames, content in Spanish, front view angle, and having an NC-17 rating. Another element may have the same time value of 1 hour, 23 minutes, 2 seconds, and 15 frames; however, this element may be an interview with the director. The particular element may be identified as "interview. 1:23:02.15.english.null.null"

Exemplary applications making use of the extended time-code naming convention include playing a particular movie based on a selection of particular suffix values; skipping over particular elements that are defined by a "commercial" prefix title field 345; and searching for a particular scene based on a particular suffix(s) played at a particular LTC number.

An extended time-code number such as contained in header 335 may be described as "TT.HH.MM.SS:FF.LL.AA.PB", where "TT" is title, "LL" is language, "AA" is angle, and "PP" is parental block.

Multimedia elements are described by particular file formats. For example, an audio file may be described by "wave" audio file format as defined by the Microsoft Corporation. A wave audio file is defined by a ".wav" extension. An example of a particular video file format is the audio/video interleaved format or AVI. An AVI file is defined by an ".avi" extension. It is contemplated that regardless of the file format, each particular A/V element may include a header that describes a particular extended time-code number.

In certain cases, particular fields may not apply. In other words, there may only be one or a limited number of variations for a particular scene, and for other scenes there may be a greater number of variations. A "NULL" value may be set for fields that do not apply. Different delimiters may be used (e.g., period, comma, colon, semicolon, slash, etc.), and delimiters may be omitted in the case where leading or trailing nulls can be represented without ambiguity.

### Information Extension (IFX) file

A DVD disc can be described as a sequence of data structures referenced by logical sector numbers (LSN) and byte offsets which are identified in index data structures. Index data structures occupy a defined order of sequential and contiguous LSNs. Video objects (VOB) are arranged sequentially and contiguously in order to provide known locations by LSN for access by program chains (PGC) and other video index data structures. An information (IFO) file on a DVD contains the index data structures and provides pointers to physical disc locations (i.e. LSN) which contain the video referenced by a particular PGC. For a title that is multi_PGC_title, multiple PGCs in the IFO file are linked by title information, selected by user actions, or selected by programming commands, resulting in playback variations of the title that is selected.

Data structures in the IFO file include Video Manager Information (VMGI) that provides information as to arrangement of the disc; Video Title Set Information (VTSI) that provides information as to navigation and presentation of a particular title set on the disc; and Video Object Sets (VOBS) that contain a grouping of video cells in VOBs. One of the functions of the IFO file is to describe the location of VOBUs, cells, and VOBs of particular titles by providing the appropriate pointers to particular LSNs that contain the data.

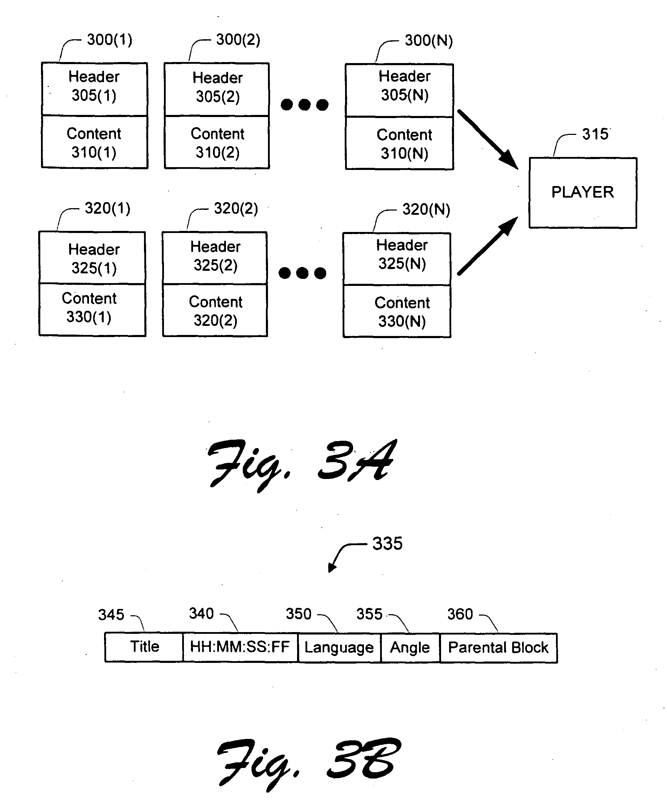

Fig. 4 shows an IFX file 400 that includes an IFO file 405, a time map (TMAP) data structure or TMAP 410, and an extended TMAP data structure or extended TMAP 415.

TMAP 410 associates LTC values to VOBUs in its Video Title Set. In this example, TMAP 410 is made up of entry 1 415(1), entry 2 415(2) to entry N 415(N). Each entry of entries 415 has a linear time code value 420 and a pointer 425. Pointers 425 of entries 415 point to a VOBU table 430 and in particular to entries 435(1) to 435(N) that provide video content and are defined by VOBU 440 and LSN 442. TMAP 410 defines defmes one_sequential_PGC_titles. VOBU table 430 may be included in IFO file 405 and links each VOBUs to storage locations on the disc expressed and indexed by the first LSN 442 of each VOBU 440.

Typically IFO file 405 includes only TMAP 410. Extended TMAP 415 is appended to TMAP 410 and IFO file 405 to create IFX file 400. Extended TMAP 415 provides an implementation of extended time-code format that adds extended time-code for multi-PGC titles while retaining normal DVD-Video IFO file functionality on legacy playback devices that only read the IFO file 405. In this example, the extended TMAP 415 is shown providing pointers 445 to some entries 435 of VOBU table 430. In certain cases the same entries of entries 435 as referenced by TMAP 410 are pointed to; however extended TMAP 415 may not necessarily reference (point to) all or the same entries 435 referenced by TMAP 410.

Extended TMAP 415 is used by players that are equipped to read extended time-code numbers. In particular, extended TMAP 415 associates VOBUs with extended time-code numbers. Legacy players that are not equipped to read extended time-code numbers, use IFO file 425 (TMAP 410) and ignore extended TMAP 415.

Extended TMAP 415 includes entry 1 450(1), entry 2 450(2), ..., entry N 450(N). Entries 450 associate particular elements with particular linear time-code numbers as provided by column linear time-code 455. Each of the entries 450 are further identified by an element column 460. Entries 450 may be differentiated based on a prefix or title value provided by title (prefix) 465 describing the applicable DVD title that the particular entry supports. Further a suffix 470 differentiates entries based on suffix values such as "language, camera angle, and parental block". Title (prefix) 465, linear time-code 455, and suffix 470 make up the extended time-code structure. For each entry 450 a pointer is provided by pointer 445. Pointers of entries 450 point to particular VOBUs in table 430. Physical access to the video data corresponding to the extended time-code is completed by accessing the LSN 442 associated with the VOBU 440 in table 430 and its linked extended time-code in table 415.

IFX file 405 is structured so that IFO 405 (TMAP 410) is made available to legacy players that are not capable of reading extended time-code numbers. Extended TMAP 415 is appended to IFO file 405 to provide extended time-code numbers, providing additional functionality. The extended time-code numbers provide functionality to present and search for (i.e., navigate) DVD content based on extended time-code numbers. Extended time-code numbers allow DVD titles to be particularly identified by the title prefix of the structure of the extended time-code number, and refer to elements of particular titles by the linear time-code that is part of the extended time-code number. Further, additional elements may be included (i.e., interspersed with) with DVD content of a particular title described by extended time-code, where the additional elements include extended time-code numbers that identify where they are to be played in relation to elements of a particular title.

### Exemplary System

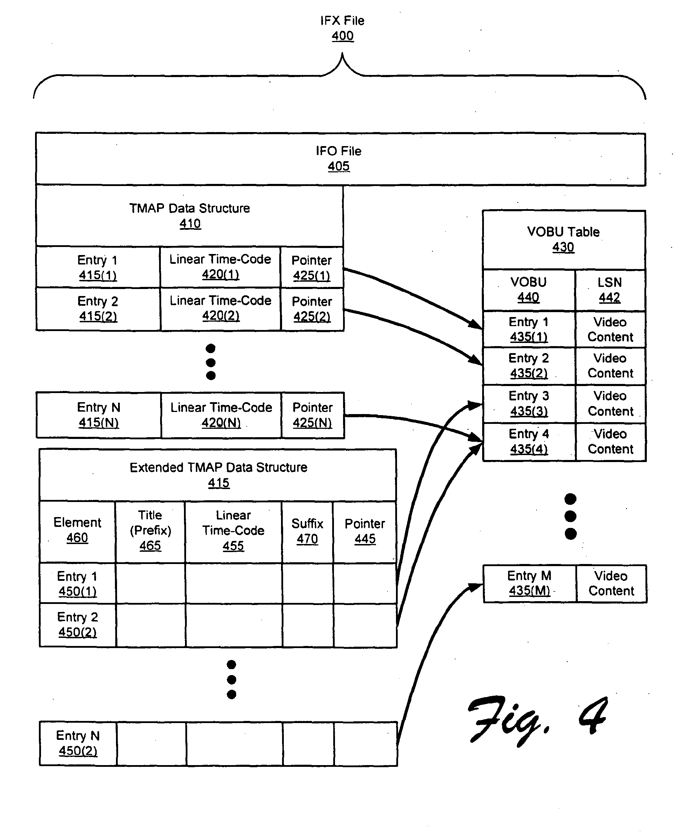

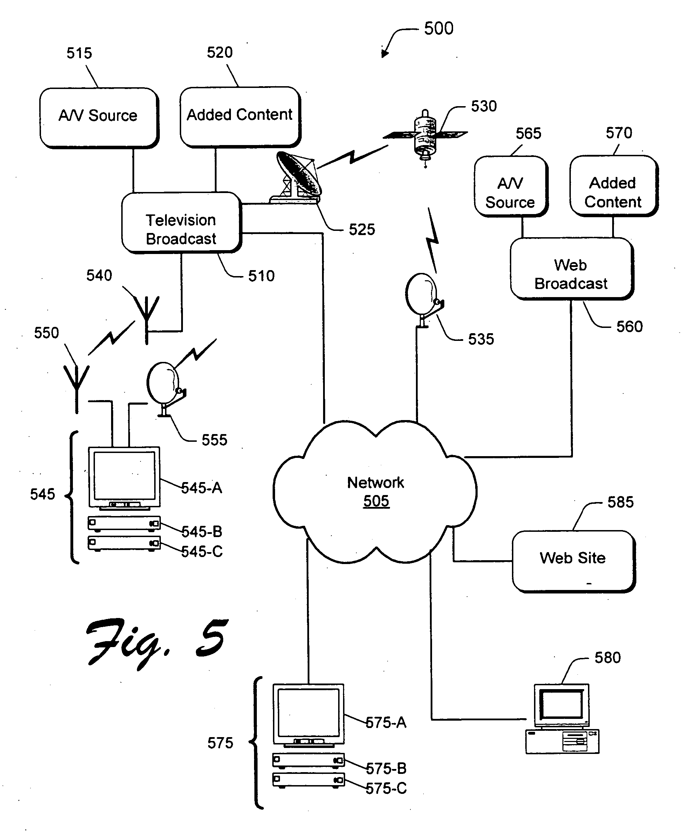

Fig. 5 shows a system 500 of multimedia devices and broadcasters to provide multimedia presentations. A network 505 includes local area, wide area, private, and public/private networks, including the Internet. Hardwired (e.g., cable) and/or wireless networks may make up network 505. Network 505 is designed to provide multimedia communications from and to various entities.

A television broadcast point 510 provides "multimedia presentation content" in system 500. A television broadcast point 510 plays multimedia elements from an A/V source 515. A number of multimedia elements such as A/V elements make up a total A/V presentation from A/V source 515. A/V elements may be associated with a particular time-code number. Television broadcast point 510 may intersperse A/V elements from A/V source 515 with elements such as commercials or promotions (i.e., interspersed elements) from an added content source 520. The interspersed elements may not have time-code numbers associated with them. Collectively the A/V elements and the added elements are referred to as multimedia presentation content or MPC. A/V source 515 and added content source 520 may stream at different times, therefore may be received at different times at various multimedia devices. An extended time-code number as defined in Fig. 3B may be appended to each A/V element and interspersed element as they are streamed from television broadcast point 510.

Television broadcast point 510 is connected to a satellite dish 525 which uplinks to a satellite 530. Satellite dish 525 transmits signals carrying MPC to satellite 530. A satellite dish 535 downlinks the signals carrying MPC from satellite 530. Network 505 is directly connected to satellite dish 535 to receive the MPC. Alternatively network 505 may be directly connected to television broadcast point 510. Television broadcast point 510 may also transmit radio frequency (RF) signals carrying the MPC through an antenna 540. Such RF signals may be received by various multimedia devices that include televisions.

A multimedia device 545 is a standalone unit not coupled to network 505, but is able receive the MPC from television broadcast point 510. Multimedia device 545 includes an A/V display unit 545-A which may be a television set or monitor with a tuner and A/V inputs and outputs. Multimedia device 545 may further include a multimedia player 545-B such as a DVD player, and a multimedia recorder 545-C. Multimedia device 545 is connected to an antenna 550 that receives RF signals from sources such as antenna 540, where the RF signals carry MPC. MPC may further be received by multimedia device 545 through a satellite dish 555, where satellite dish 555 receives signals from satellite 530.

In certain cases, multimedia device 545 receives A/V elements and interspersed elements without any associated time-code number. An extended time-code number may be attached to each A/V element and interspersed element as they are received at multimedia device 545. The A/V elements and interspersed elements may be recorded by multimedia recorder 545-C, and accessed by reference to unique extended time-code numbers.

Broadcast of MPC may also be performed through the Internet. Typically, this is known as a "web broadcast" and provides digital transmission of MPC. A web broadcast point 560 may include an interactive web site accessible through network 505. Web broadcast 560 receives A/V presentation from an A/V source 565 with interspersed elements that can include text, graphics, audio/video clips, and/or HTML or SMIL files from an added content source 570. Alternatively such elements may come from other sources.

Web broadcast point 560 delivers MPC (i.e., A/V elements and interspersed elements) to network 505 for access by various multimedia devices connected to network 505. Alternatively, web broadcast point 560 may deliver MPC through a satellite as described above.

A multimedia device 575 is coupled to network 505 and receives MPC from various sources including television broadcast point 510 and web broadcast point 560. Multimedia device 575 includes an A/V display unit 575-A which may be a television set or monitor with a tuner and A/V inputs and outputs. Multimedia device 575 may further include a multimedia player 575-B such as a DVD player, and a multimedia recorder 575-C.

In certain cases, multimedia device 575, similar to multimedia device 545, may receive A/V elements and interspersed elements without any time-code number associated. An extended time-code number is attached to each A/V element and interspersed element as they are received at multimedia device 575. The A/V elements and interspersed elements may be recorded by multimedia recorder 575-C, and accessed by reference to unique extended time-code numbers. In other cases, multimedia devices 545 and 575 receive A/V elements and/or interspersed elements that have extended time-code numbers. Sequencing of and playing the presentation at multimedia devices 545 and 575 are based on the extended time-code numbers.

Multimedia devices and standalone units include WebTV units, and personal video recorder (PVR) units. In this example a PC 580 is coupled to network 505 and receives MPC. Like multimedia devices 545 and 575, PC 580 may attach extended time-code numbers to A/V elements and interspersed elements that are received without extended time-code numbers.

Various sources may provide other content, including updates to files and programs, used by multimedia devices. This content may not necessarily be multimedia elements or A/V elements and can include IFX files as described in Fig. 4. In this example, a web site 585 illustrates a source from which a multimedia device accesses additional content such as updated files. Further, broadcast points such as television broadcast point 510 and web broadcast point 560 may stream new A/V elements to be sequenced with pre-existing content at various multimedia devices.

### Exemplary Multimedia Device

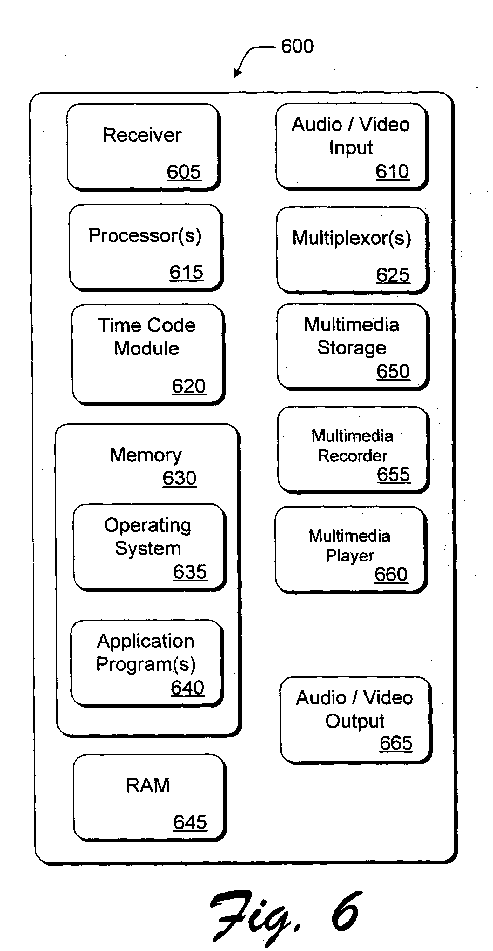

Fig. 6 shows an architecture for an exemplary multimedia device 600. Multimedia devices 545, 575, and 580 of Fig. 5 are representative of the architecture of multimedia device 600. Multimedia device 600 may be a distinct self contained unit such as PC 580, or may be comprised of various units such as multimedia devices 545 and 575. As will be evident below, multimedia 600 provides functionality to receive MPC, process MPC, and display MPC. In certain cases, multimedia device 600 also records MPC.

Multimedia device 600 may include a receiver module 605 that is configured to receive RF signals from a television source. Other signals and data may also be received from various sources, including devices and networks, through an audio video input module 610.

Multimedia device 600 includes one or more processors 615 (e.g., microprocessors) which process various instructions to control the operation of multimedia device 600 and to communicate with other electronic and computing devices.

When A/V elements and interspersed elements are received without time-code numbers, such numbers may be attached to each through the use of an extended time-code module 620. Extended time-code module 620 is configured to generate and attach a unique extended time-code number to each A/V element and each interspersed element as they are received by multimedia device 600.

Multimedia device 600 can be implemented with one or more memory components, examples of which include a non-volatile memory 630 (e.g., ROM, Flash, EPROM, EEPROM, etc.). Memory 630 is configured to store an operating system module 635 that contains an operating system to be used on multimedia device 600. Application programs may be stored in an applications program module 640 of memory 630. Random access memory (RAM) may also be implemented in multimedia device 600 for temporary storage of files and programs used by multimedia device 600. A RAM module 645 is illustrated.

MPC may be stored in a multimedia storage module 650. Multimedia storage module 650 may make use of various media such as optical disks, magnetic tape, and magnetic disk. Multimedia storage module 650 may be accessed by other modules and devices that are part of multimedia device 600, and devices external to multimedia device 600. Multimedia recorder module 655 provides recording capability to multimedia storage 650. A multimedia player module 660 may either directly receive MPC from processor(s) 615 or access MPC from multimedia storage 650 for MPC. Processor(s) 615 may access A/V elements and elements in multimedia storage module 650 by identifying particular extended time-code numbers.

An audio/video output module 665 provides direct output to a display or to an intermediate device. Output module 665 may split audio and video information and stream them to individual channels. Processor(s) 615 controls output module 665 and the A/V streams sent from output module 665.

### Exemplary Multimedia Player

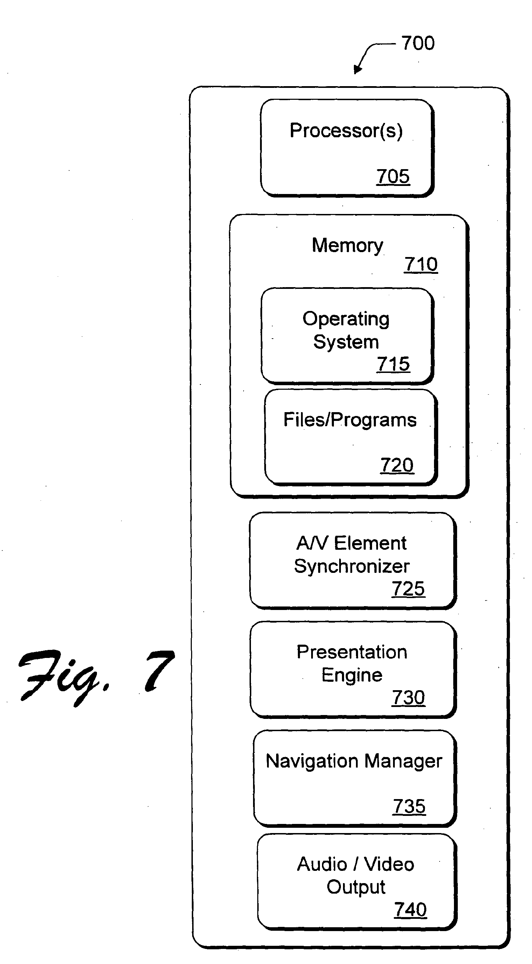

Fig. 7 shows an architecture for an exemplary multimedia player 700. Multimedia player 700 includes various devices, but in particular includes DVD players that utilize industry standards, in particular standards set by the National Televisions Systems Committee (NTSC). The architecture of multimedia player 700 may be used by multimedia player 660 of Fig. 6. Multimedia player 700 may read from prerecorded media such as a commercially produced DVD, or from media that may be written to such as recordable DVDs, or receive A/V element and interspersed element streams.

One or more processors 705 may be used to process signals received from a medium (e.g. DVD), and to communicate with various modules of multimedia player 700. In cases where multimedia player 700 is part of multimedia device 700, processor(s) 615 illustrated in Fig. 6 may be used for processor(s) 705.

Processor(s) 705 process and sequence A/V elements appended extended time-code numbers. In the case of DVD, IFX files are used by processor(s) 705 to sequence A/V elements.

Multimedia player 700 may include a memory module 710 which stores an operating system module 715 that contains an operating system to be used on multimedia player 700. Memory module 710 may further include a files/programs module 720 that contains applicable files and/or programs for multimedia player 700.

An A/V element or element synchronizer module 725 is used to synchronize separate streams of audio, video, and/or other data based on extended time-code numbers. Synchronizer module 725 is particular used to perform late binding of streams of A/V elements and/or elements that were previously not synchronized. For example, multimedia player may be receiving a stream containing a new language track that is to be synchronized with video that is either resident at multimedia player 700 or received from another source. Synchronizer module 725 synchronizes the audio and video based on the extended time-code number. In particular, a linear time-code number of the extended time-code number is used to synchronize the audio and video.

Multimedia player 700 may further include a presentation engine module 730 that uses presentation data from the media to control what is displayed from multimedia player 300 as derived from information in an IFO or IFX file. A navigation manager module 735 uses navigation data to provide an interface, create menus, and control any branching of A/V elements or scenes which are also derived from an IFO or IFX file. Further, an audio/video output module 740 is provided in multimedia player 700 to output signals to a display device, or an intermediate device prior to the display device.

### Adding extended time-code

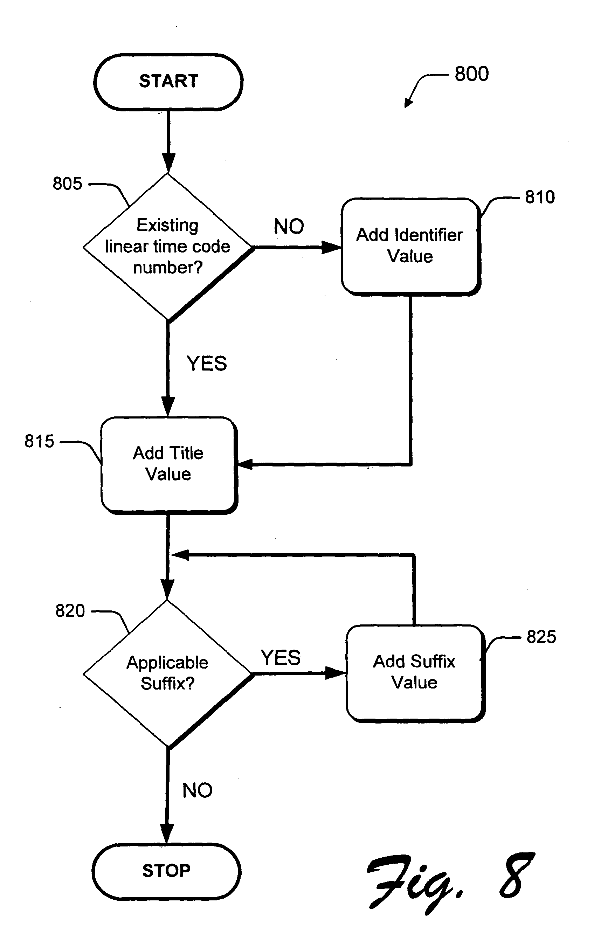

Fig. 8 shows a process 800 which creates or adds extended time-code values. Process 800 may be performed at a broadcast point such as television broadcast point 510 or web broadcast point 560 of Fig. 5. In certain embodiments, process 800 is performed at a multimedia device such as multimedia devices 545, 575 and 580 as shown in Fig. 5, and described by the architecture of multimedia device 600 as shown in Fig. 6. In other cases, process 800 is performed when a DVD or other media is created.

At block 805, a decision is made if an A/V element or interspersed element has a linear time-code number appended to it. The linear time-code number may be defined by a SMPTE standard. If the A/V element or interspersed element has a linear time-code number (following the YES branch of block 805), the linear time-code number is kept. If the A/V element or interspersed element does not have a linear time-code number (following the NO branch of 805), a linear time-code is attached at block 810. At block 810, the linear time-code that is attached describes when the particular A/V element or interspersed element is to be played.

At block 815, a title value is added to the linear time-code of a particular A/V element or interspersed element. An extended time-code number is created. The title value differentiates among different MPC presentations.

At block 820, a decision is made if applicable suffixes (i.e., suffix fields) exists that further define an A/V element or interspersed element. Such suffixes include angle, language, and parental block (i.e. rating). If a suffix applies (the YES branch of block 820), block 825 is performed, and a suffix value is added to the extended time-code number. Block 820 is performed until all applicable suffixes are determined. Each applicable suffix is concatenated to the extended time-code number, until all suffix values have been determined (the NO branch of block 820). In certain cases, particular suffix fields will not apply to certain A/V elements or interspersed elements.

### Searching based on extended time-code

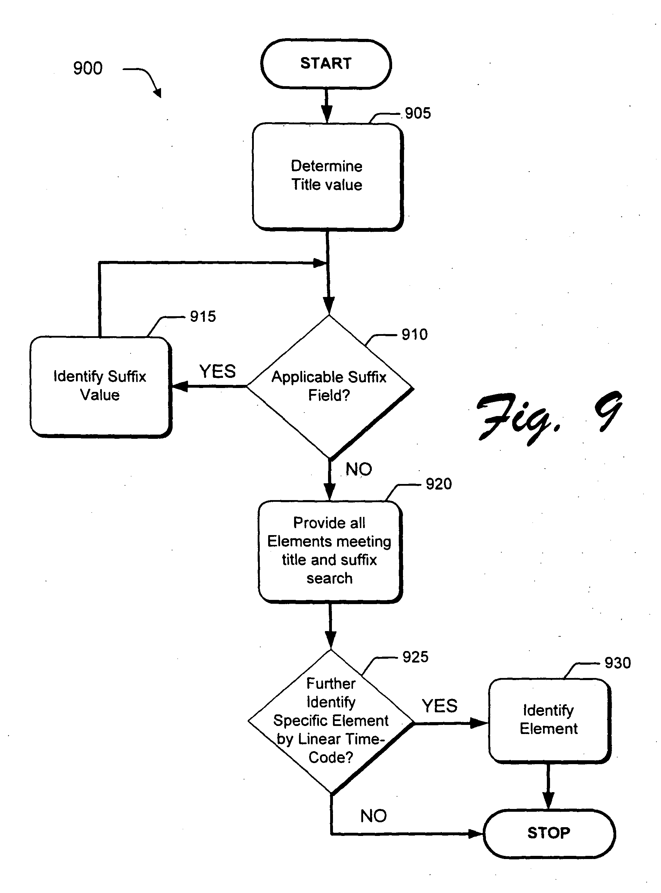

Fig. 9 shows a process 900 which searches for an element based on an extended time-code number. Process 900 may be performed at a multimedia device such as multimedia devices 545, 575 and 580 as shown in Fig. 5, and described by the architecture of multimedia device 600 as shown in Fig. 6. Multimedia player 700 of Fig. 7 may also use process 900 to search for particular A/V elements and/or interspersed elements based on title prefix and/or suffix values.

At block 905, the title value of the extended time-code number is determined. The title value distinguishes A/V elements and interspersed elements that are part of a particular MPC from other MPCs. For example, a search may be made as to a particular movie title, or to particular commercials.

Several suffixes may apply in the selection of a particular A/V element and/or an interspersed element. For example, it may be desirable to search based on a particular language, a particular angle, a particular parental block, or a combination of the three.

At block 910, a decision is made as whether a particular suffix applies. Although suffixes may proceed or follow other suffixes in an extended time-code number structure, suffixes have the same hierarchy. Therefore searches may be made for any particular suffix value.

If the search is based on a particular suffix value (the YES branch of block 910), block 915 is performed. At block 915 the particular suffix value is determined. If all suffix field search values have been presented (the NO branch of block 910), then block 920 is performed. At block 920, all A/V elements and interspersed elements are selected based on the determined title and suffix values. It may be desirable to complete process 900 at this point and provide all A/V elements and interspersed elements that meet the value determinations.

A further step may be taken to select a particular A/V element or interspersed element, which can include a particular scene, based on a linear time-code number. At block 925, the searching is narrowed down to a particular linear time-code number. If further search is performed based on the linear time-code (following the YES branch of block 925), then block 930 is performed identifying the particular element. For example, process 900 may be used to perform a search for a particular element based on a particular scene of a particular variation of a particular movie title.

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A method comprising:
identifying multimedia elements having a linear time-code number;
adding a prefix value to linear time-code numbers of each identified multimedia element; and
adding suffix values to the linear time-code numbers of each identified multimedia element.

2. The method of claim 1 wherein the multimedia elements comprise audio video elements and interspersed elements.

3. The method of claim 1 wherein the prefix value comprises a title value.

4. The method of claim 1 wherein the suffix values comprise language value, angle value, and parental block value.

5. The method of claim 1 wherein linear time-code numbers with prefix and suffix values are resident in a time map table that associates the multimedia elements to linear time-code numbers.

6. The method of claim 5 wherein the time map is used by a DVD player to point to particular sectors on a DVD disc containing content representing the multimedia elements.

7. The method of claim 5 wherein the time map table is part of a file that provides pointers to data structures in a medium.

8. A DVD player that implements the method of claim 7, and wherein the medium is a DVD disc.

9. A broadcast point that performs the method of claim 1.

10. A multimedia device that performs the method of claim 1.

11. The method of claim 1 further comprising identifying elements without a linear time-code number, and adding a linear time-code to the identified elements without a linear time-code.

12. The method of claim 11 wherein the elements are interspersed between audio video elements that have linear time-code numbers.

13. A method comprising:
identifying a title value describing a particular multimedia presentation content comprised of multimedia elements described by extended time-code numbers; and
searching for particular multimedia elements based on their extended time-code numbers.

14. The method of claim 13 wherein the extended time-code numbers comprise a prefix and suffixes.

15. The method of claim 13 wherein the searching is performed based on the prefix and on one or more of the suffixes.

16. The method of claim 13 wherein the suffixes comprise angle, language, and parental block.

17. The method of claim 13 wherein the searching is performed based on a time map table that associates multimedia elements with extended time-code numbers.

18. A DVD player that implements the method of claim 17.

19. A personal video recorder that implements the method of claim 17.

20. The method of claim 17 wherein the time map table is part of an information file that provides navigation and presentation information for titles in a medium.

21. A DVD player that implements the method of claim 20, wherein the medium is a DVD disc.

22. A personal video recorder that implements the method of claim 20.

23. A multimedia device that performs the method of claim 13.

24. A multimedia player that performs the method of claim 13.

25. A method comprising:
receiving multimedia elements with a linear time-code;
receiving multimedia elements without a linear time-code;
attaching linear time-codes; and
synchronizing all multimedia elements based the unique linear time-codes.

26. A broadcast point that performs the method of claim 23.

27. A multimedia device that performs the method of claim 23.

28. A multimedia player that performs that method of claim 23.

29. A method comprising:
extending an information file in a DVD to provide added functionality in describing content stored on the DVD, and
providing navigation and presentation information from the information file for playback of various titles.

30. The method of claim 29 wherein the extending the information file is performed by extended time-code numbers that describe sequencing of the content.

31. The method of claim 29 wherein the extending the information files adds a time map table that describes sequencing of the content.

32. The method of claim 29 wherein the extending the information files is performed by receiving information describing the added functionality from a separate source from the DVD.

33. A multimedia device comprising:
a processor;
a multimedia storage module executable on the processor and configured to store multimedia presentation content comprising of multimedia elements; and
an extended time-code number module executable on the processor configured to append extended time-code numbers to multimedia element without a time-code number.

34. The multimedia device of 33 further comprising a multimedia player module executable on the processor and configured to play the audio/video element and interspersed elements.

35. The multimedia device of claim 33 wherein the multimedia player is configured to search for audio/video element and interspersed elements based on extended time-code numbers.

36. The multimedia device of claim 33 further comprising a multimedia player.

37. The multimedia device of claim 33 wherein the multimedia device is a DVD player.

38. The multimedia device of claim 33 wherein the multimedia device is a personal video recorder.

39. A computer-readable medium having stored thereon a data-structure comprising:
a first data field containing a title value;
a second data field containing a time-code value; and
a third data field containing a suffix value.

40. A system comprising:
a broadcast point providing multimedia elements; and
a multimedia device that receives the multimedia elements, wherein the multimedia device further receives extended time-code numbers associated with each multimedia element.

41. The system of claim 40 wherein the extended time-code numbers are provided by the broadcast point.

42. The system of claim 40 wherein the extended time-code numbers are provided by a web site.
